# EUROPÄISCHE PATENTSCHRIFT

(11) **EP 1 792 071 B1**
(45) Veröffentlichungstag und Bekanntmachung des Hinweises auf die Patenterteilung: **13.02.2008**
(21) Anmeldenummer: 05763515.3
(22) Anmeldetag: 02.08.2005
(51) Int. Cl.: F02M 21/02

(54) **WÄRMEÜBERTRAGER FÜR WASSERSTOFFBETRIEBENE KRAFTSTOFFVERSORGUNGSANLAGEN**
HEAT EXCHANGER FOR HYDROGEN-OPERATED FUEL SUPPLY SYSTEMS
ECHANGEUR DE CHALEUR POUR INSTALLATIONS D'ALIMENTATION EN CARBURANT FONCTIONNANT A L'HYDROGENE

(30) Priorität: 21.09.2004 DE 102004045638
(43) Veröffentlichungstag der Anmeldung: 06.06.2007
(73) Patentinhaber: Bayerische Motorenwerke Aktiengesellschaft, 80809 München (DE)
(72) Erfinder: TURINI, Jürgen, 82216 Stefansberg (DE); SCHNAGL, Johann, 82061 Neuried (DE); VON KUENSBERG SARRE, Christopher, 80802 München (DE)
(86) Internationale Anmeldenummer: PCT/EP2005/008352
(87) Internationale Veröffentlichungsnummer: WO 2006/032323

(56) Entgegenhaltungen:
- EP-A- 0 779 468
- DE-A1- 4 320 556
- US-A- 4 386 309
- US-B1- 6 634 178
- PATENT ABSTRACTS OF JAPAN Bd. 2003, Nr. 09, 3. September 2003 (2003-09-03) -& JP 2003 130290 A (MITSUBISHI HEAVY IND LTD), 8. Mai 2003 (2003-05-08)
- PATENT ABSTRACTS OF JAPAN Bd. 013, Nr. 036 (M-790), 26. Januar 1989 (1989-01-26) -& JP 63 246459 A (AGENCY OF IND SCIENCE & TECHNOL), 13. Oktober 1988 (1988-10-13)

## Beschreibung

Die vorliegende Erfindung betrifft eine Kraftstoffversorgungsanlage gemäß dem Oberbegriff des Patentanspruches 1.

Seit geraumer Zeit werden Fahrzeuge mit wasserstoffbetriebenen Verbrennungsmotoren erforscht. Hinsichtlich der Speicherung des für den Betrieb des Verbrennungsmotors benötigten Wasserstoffs gibt es zwei gegenläufige Ansätze, nämlich die Speicherung gasförmigen Wasserstoffs bei Umgebungstemperatur und sehr hohem Druck sowie die Speicherung flüssigen, kryogenen Wasserstoffs bei einer Temperatur von ca. -250°C und relativ geringem Druck. Die Speicherung kryogenen Wasserstoffs hat den Vorteil, dass man eine höhere Energiedichte erreicht als bei einer Speicherung gasförmigen Wasserstoffs. Um den Wasserstoff längere Zeit, d.h. mehrere Wochen flüssig zu halten, muss der Wasserstofftank extrem gut isoliert sein. Dennoch ist ein gewisser Wärmeeintrag in den Wasserstofftank und dadurch bedingt eine ständige Verdampfung geringer Mengen flüssigen Wasserstoffs unvermeidlich. Um den Druckanstieg im Wasserstofftank zu begrenzen, muss bei längeren Standzeiten des Fahrzeugs ständig eine geringe Menge verdampften Wasserstoffs an die Umgebung abgeführt werden. Der abzuführende Wasserstoff kann dabei zu Wasser oxidiert, d.h. in einen "ungefährlichen" Zustand gebracht werden.

Für den Betrieb des Verbrennungsmotors muss der flüssige, kryogene Wasserstoff von ca. -250°C auf eine Temperatur vorgewärmt werden, die oberhalb der Umgebungstemperatur liegt. Dies ist schon deshalb erforderlich, weil bei derart niedrigen Temperaturen Dichtungen der Kraftstoffanlage verspröden und undicht würden, was Funktionsstörungen an verschiedenen Komponenten der Kraftstoffanlage zur Folge hätte, z.B. an Ventilen.

Würde der Wasserstoff beim Ausströmen aus dem Wasserstofftank nicht vorgewärmt werden, so würden an den Oberflächen der einzelnen "Kraftstoffanlagenkomponenten", d.h. an den Oberflächen der Kraftstoffleitungen, an den Ventilen, etc. ebenfalls sehr tiefe Temperaturen auftreten. Dies wiederum hätte zur Folge, dass die in der Umgebungsluft enthaltene Feuchtigkeit lokal kondensiert. Das abgeschiedene Wasser würde auf den Bauteiloberflächen sofort gefrieren, was allmählich eine vollständige Vereisung der Kraftstoffanlage zur Folge hätte. Aufgrund der extrem niedrigen Temperatur des Wasserstoffs bestünde sogar die Gefahr, dass sich die Umgebungsluft im Bereich dieser extrem kalten Komponenten lokal verflüssigt bzw. dass Sauerstoff aus der Umgebungsluft ausdestilliert wird. All diese Effekte sind unerwünscht und bergen erhebliche Gefahren.

Aus dem Stand der Technik ist bereits bekannt, den für die Verbrennung vorgesehenen Wasserstoff in einem Wärmeübertrager auf eine Temperatur, die oberhalb der Umgebungstemperatur liegt, vorzuwärmen, wobei die für die Vorwärmung benötigte Wärmeleistung, die bei Versuchsmotoren in einem Bereich zwischen 20 und 25 KW liegt, dem Kühlkreislauf des Verbrennungsmotors entzogen wird. Die bei herkömmlichen Verbrennungsmotoren über den Kühler ungenutzt an die Umgebung abgegebene Wärme wird also zur Vorwärmung des Wasserstoffs verwendet.

Aufgabe der Erfindung ist es, eine Kraftstoffversorgungsanlage für einen mit Wasserstoff betreibbaren Verbrennungsmotor oder für eine Brennstoffzelle zu schaffen, bei welcher der dem Wasserstofftank entnommene Wasserstoff vorgewärmt wird, wobei sichergestellt ist, dass die Temperaturen an Oberflächen der einzelnen Komponenten der Kraftstoffanlage mindestens gleich der Temperatur der Umgebungsluft sind.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Kraftstoffversorgungsanlage für einen mit Wasserstoff betreibbaren Verbrennungsmotor oder für eine Brennstoffzelle aus, wobei ein Wasserstofftank und ein Wärmeübertrager vorgesehen ist. Im Wasserstofftank ist tiefgekühlter flüssiger Wasserstoff gespeichert. Der gespeicherte Wasserstoff weist eine Temperatur auf, die im Bereich von ca. -250°C liegt. Der Wärmeübertrager ist zur Erwärmung des dem Wasserstofftank entnommenen Wasserstoffs vorgesehen. Durch den Wärmeübertrager wird der Wasserstoff von der im Wasserstofftank herrschenden Temperatur auf eine Temperatur vorgewärmt, die gleich der Umgebungstemperatur ist oder die über der Umgebungstemperatur liegt. Der Wärmeübertrager weist einen Kraftstoffeingang auf, der an den Wasserstofftank angeschlossen ist. Vom Kraftstoffeingang aus durchströmt der Wasserstoff den "Wasserstoffbereich" des Wärmeübertragers hin zu einem Kraftstoffausgang, über den der vorgewärmte Wasserstoff aus dem Wärmeübertrager abgeführt wird. Der Wärmeübertrager weist ferner einen Kühlmitteleingang auf, über den heißes Kühlmittel aus dem Kühlkreislauf des Verbrennungsmotors bzw. der Brennstoffzelle in einen "Kühlmittelbereich" des Wärmeübertragers strömt, der in "thermischer Verbindung" mit dem "Wasserstoffbereich" steht. Im Wärmeübertrager gibt das heiße Kühlmittel Wärme an den Wasserstoff ab und strömt anschließend über einen Kühlmittelausgang wieder aus dem Wärmeübertrager heraus.

Der Kern der Erfindung besteht darin, dass der Wärmeübertrager von einem fluiddichten "Mantel" bzw. einer fluiddichten "Hülle" umgeben ist. Der Mantel bzw. die Hülle kann die Form eines "Kasten" haben. Der Mantel kann auch die Form einer Röhre, eines Kreiszylinders oder eines "Tanks" mit konvexen Stirnflächen haben, wie er von Tankfahrzeugen bekannt ist. Zwischen dem Mantel und dem Wärmeübertrager ist ein Zwischenraum vorgesehen, der von einem Fluid durchströmt ist. Die Temperatur und der Volumenstrom des durch den Zwischenraum strömenden Fluids sind so abgestimmt, dass sichergestellt ist, dass die Temperatur an der Oberfläche des Mantels mindestens gleich der Umgebungstemperatur ist oder darüber liegt. Dadurch ist sichergestellt, dass weder die Umgebungsluft noch die darin enthaltene Feuchtigkeit im Bereich des Wärmeübertragers, d.h. an der Oberfläche des Mantels kondensiert. Somit wird eine Vereisung des Wärmeübertragers bzw. des den Wärmeübertrager umgebenden Mantels und der "nachfolgenden" Komponenten der Kraftstoffanlage vermieden. Insbesondere wird vermieden, dass sich die Umgebungsluft lokal im Bereich des Wärmeübertragers verflüssigt, d.h. dass Sauerstoff aus der Umgebungsluft ausdestilliert wird. Die "nach" dem Wärmeübertrager angeordneten Komponenten der Kraftstoffanlage haben ebenfalls mindestens Umgebungslufttemperatur, da sie von dem im Wärmeübertrager bereits vorgewärmten Wasserstoff durchströmt werden.

Der Mantel, der den Wärmeübertrager umgibt, kann unmittelbar an den Wasserstofftank angeflanscht sein. Dadurch ist sichergestellt, dass sämtliche Komponenten der Kraftstoffanlage, in denen sich kryogener Wasserstoff befindet, an ihrer Oberfläche mindestens Umgebungslufttemperatur haben.

Vorzugsweise ist der Mantel, welcher den Wärmeübertrager umgibt, undurchlässig gegenüber Wasserstoff. Somit kann selbst bei einem Leck im "Wasserstoffbereich" des Wärmeübertragers bzw. an einer der von Wasserstoff durchströmten Komponenten der Kraftstoffanlage innerhalb des Mantels Wasserstoff nicht unkontrolliert in die Umgebungsluft entweichen. Zusätzlich kann in dem Zwischenraum zwischen dem Mantel und dem Wärmeübertrager bzw. in dem Fluidkreislauf, der den Zwischenraum mit Fluid versorgt, ein Wasserstoffsensor angeordnet sein, der im Falle eines Lecks in einer der wasserstoffführenden Komponenten der Kraftstoffanlage einen Austritt von Wasserstoff aus dem Wärmeübertrager in den Zwischenraum und somit in den Fluidkreislauf detektiert.

Der Wärmeübertrager kann über mehrere von Wasserstoff durchströmte Leitungen mit dem Wasserstofftank verbunden sein. Vorzugsweise ist der Wärmeübertrager über eine sogenannte "Zentralkupplung" mit dem Wasserstofftank verbunden. Unter dem Begriff "Zentralkupplung" ist zu verstehen, dass in den einzelnen Verbindungsleitungen zwischen dem Wasserstofftank und dem Wärmeübertrager jeweils eine lösbare "Leitungskupplung" angeordnet ist. Der Wasserstofftank und der Wärmeübertrager sind somit lösbar miteinander verbunden. Dies ist nicht nur mit Blick auf die Montage bzw. Demontage von Vorteil, sondern ermöglicht, dass der Wasserstofftank und der Wärmeübertrager unabhängig voneinander gefertigt, geprüft bzw. optimiert werden können.

Ventile und diverse Sensoren können im Bereich zwischen dem Wasserstofftank und dem Wärmeübertrager "abgeschirmt" in einer sogenannten "Nebensystemkapsel" angeordnet sein. Vorzugsweise ist die Nebensystemkapsel von heißem Kühlmittel angeströmt bzw. durchströmt. Dadurch kann sichergestellt werden, dass die in der Nebensystemkapsel angeordneten Ventile und Sensoren auf einer gewissen Mindestbetriebstemperatur gehalten werden, was für eine einwandfreie Funktion dieser Komponenten wichtig ist. Würden die Ventile nicht "beheizt". werden, so würden ihre Dichtungen verspröden, was zu Undichtigkeiten führen könnte.

Der Zwischenraum zwischen dem Mantel und dem Wärmeübertrager kann an den Kühlkreislauf des Verbrennungsmotors angeschlossen sein. Für den Anwendungsfall einer Brennstoffzelle kann der Zwischenraum an den Kühlkreislauf der Brennstoffzelle angeschlossen sein. Der Zwischenraum kann unmittelbar an den "Kühlmittelbereich" des Wärmeübertragers angeschlossen sein. Alternativ dazu kann der Zwischenraum auch an einen separaten Kühlkreislauf angeschlossen sein, der von dem Kühlkreislauf des Verbrennungsmotors bzw. der Brennstoffzelle getrennt ist. Der Zwischenraum muss also nicht notwendigerweise mit Kühlmittel des Kühlkreislaufs des Verbrennungsmotors bzw. der Brennstoffzelle durchströmt werden, sondern kann auch von einem anderen geeigneten Medium durchströmt werden.

Der Mantel kann sehr steif als "Schutzmantel" ausgebildet sein, der den Wärmetauscher und das innerhalb des Mantels angeordnete Leitungssystem bei einem Unfall vor mechanischen Beschädigungen schützt.

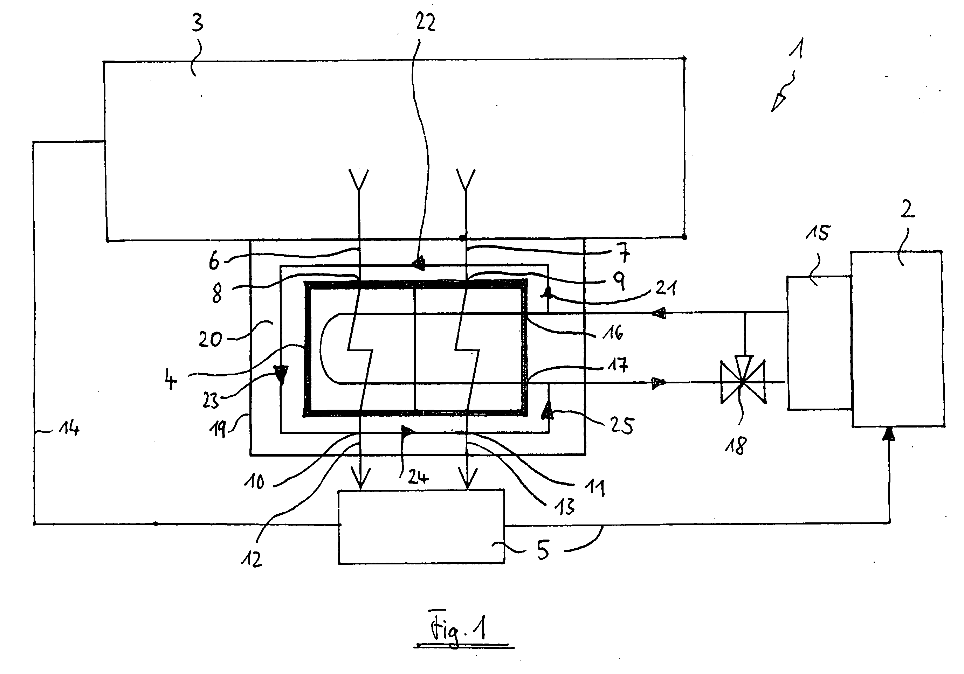

Im Folgenden wird die Erfindung im Zusammenhang mit der Zeichnung näher erläutert. Die einzige Figur 1 zeigt das Grundprinzip der Erfindung in schematischer Darstellung.

Figur 1 zeigt eine Kraftstoffversorgungsanlage 1 für einen mit Wasserstoff betreibbaren Verbrennungsmotor 2. Die Kraftstoffversorgungsanlage 1 weist einen Wasserstofftank 3 auf, in dem flüssiger Wasserstoff gespeichert ist, einen Wärmeübertrager 4 sowie ein hier nur äußerst schematisch dargestelltes, den Wärmeübertrager 4 mit dem Verbrennungsmotor verbindendes "Fluidsystem" 5, das Leitungen, Ventile, Einspritzdüsen etc. umfassen kann und das primär dazu vorgesehen ist, Wasserstoff aus dem Wärmeübertrager 4 dem Verbrennungsmotor 2 zuzuführen.

Der Kraftstofftank 3 ist über eine Teilstromleitung 6 und eine Hauptstromleitung 7 mit einem ersten Kraftstoffeingang 8 bzw. mit einem zweiten Kraftstoffeingang 9 des Wärmeübertragers verbunden. Der erste Kraftstoffeingang 8 steht mit einem ersten Kraftstoffausgang 10 und der zweite Kraftstoffeingang 9 mit einem zweiten Kraftstoffausgang 11 in Fluidverbindung. Die Kraftstoffausgänge 10, 11 wiederum stehen über Verbindungsleitungen 12, 13 mit dem Fluidsystem 5 in Verbindung, das einerseits den Verbrennungsmotor 2 mit vorgewärmten Wasserstoff versorgt und das bei Bedarf über eine Leitung 14 einen geringen Teil des vorgewärmten Wasserstoffs zurück in den Wasserstofftank 3 leitet. Durch die Rückleitung vorgewärmten Wasserstoffs in den Wasserstofftank 3 kann während des Betriebs des Verbrennungsmotors ein Teil des im Wasserstofftank enthaltenen flüssigen Wasserstoffs verdampft werden. Dadurch kann während des Betriebs des Verbrennungsmotors stets ein hinreichend hoher Druck im Wasserstofftank aufrecht erhalten werden, wodurch sich der Einsatz einer Kryopumpe erübrigt.

Der Verbrennungsmotor 2 wird durch einen Kühler 15 gekühlt. Heißes Kühlmittel wird von einer hier nicht dargestellten Kühlmittelpumpe über einen Kühlmitteleingang 16 in den Wärmeübertrager 4 gepumpt. Im Wärmeübertrager 4 gibt das Kühlmittel Wärme an den Wasserstoff ab und wärmt diesen vor. Das abgekühlte Kühlmittel strömt über einen Kühlmittelausgang 17 zurück in Richtung des Kühlers 15. Der Kühlmitteleingang 16 und der Kühlmittelausgang 17 können über ein Thermostatventil 18 kurzgeschlossen werden. Das Thermostatventil 18 wird so geregelt, dass am Kühlmittelausgang 17 des Wärmeübertragers 4 eine vorgegebenen Soll-Temperatur von z.B. 50°C eingehalten wird.

Wie aus Figur 1 ersichtlich ist, ist der Wärmeübertrager 4 von einem Mantel 19 umschlossen. Der Mantel 19 ist bei dem hier gezeigten Ausführungsbeispiel unmittelbar an den Kraftstofftank 3 angeflanscht. Der Mantel 19 ist in einem Abstand von dem Wärmeübertrager 4 angeordnet. Der "Zwischenraum" 20 zwischen dem Mantel 19 und dem Wärmeübertrager 4 wird von Kühlmittel des Kühlkreislaufs durchströmt, was hier nur schematisch durch Pfeile 21 - 25 angedeutet ist. Dadurch ist sichergestellt, dass die Temperatur an der Oberfläche des Mantels 19 mindestens Außentemperatur hat oder darüberliegt.

In den Leitungen 6, 7, über die der Wasserstofftank 3 mit dem Wärmeübertrager 4 verbunden ist, können jeweils Leitungskupplungen (nicht dargestellt) angeordnet sein. Über die Leitungskupplungen ist der Wasserstofftank 3 lösbar mit dem Wärmeübertrager verbunden. Die Leitungskupplungen sowie diverse Sensoren (nicht dargestellt) können separiert in einer zwischen dem Wasserstofftank 3 und dem Wärmeübertrager 4 angeordneten "Nebensystemkapsel" (nicht dargestellt) angeordnet sein. Die Nebensystemkapsel wird von heißem Kühlmittel angeströmt oder durchströmt, wodurch sichergestellt ist, dass die darin angeordneten Ventile und Sensoren auf einer gewissen Mindestbetriebstemperatur gehalten werden, die für eine einwandfreie Funktion erforderlich ist.

## Patentansprüche

1. Kraftstoffversorgungsanlage (1) für einen mit Wasserstoff betreibbaren Verbrennungsmotor (2) bzw. für eine Brennstoffzelle, mit
- einem Wasserstofftank (3), der zur Speicherung tiefgekühlten, flüssigen Wasserstoffs vorgesehen ist,
- einem Wärmeübertrager (4), der zur Vorwärmung des tiefgekühlten Wasserstoffs vorgesehen ist, wobei der Wärmeübertrager (4)
o mindestens einen Kraftstoffeingang (8, 9) aufweist, welcher in Fluidverbindung mit dem Wasserstofftank (3) steht,
o mindestens einen mit dem Kraftstoffeingang (8, 9) in Fluidverbindung stehenden Kraftstoffausgang (10, 11) aufweist, über den vorgewärmter Wasserstoff aus dem Wärmeübertrager (4) abgeführt wird,
o mindestens einen Kühlmitteleingang (16) aufweist, über den dem Wärmeübertrager (4) heißes Kühlmittel aus einem Kühlkreislauf des Verbrennungsmotors (2) bzw. der Brennstoffzelle zugeführt wird und
o mindestens einen mit dem Kühlmitteleingang (16) in Fluidverbindung stehenden Kühlmittelausgang aufweist, über den abgekühltes Kühlmittel, das Wärme an den Wasserstoff abgegeben hat, aus dem Wärmeübertrager (4) abgeführt wird,
**dadurch gekennzeichnet, dass**
der Wärmeübertrager (4) von einem fluiddichten Mantel (19) umschlossen ist, wobei zwischen dem Wärmeübertrager (4) und dem Mantel (19) ein Zwischenraum (20) vorgesehen ist, der von einem Fluid durchströmt ist, das Wärme an den Wärmeübertrager (4) abgibt und den Wärmeübertrager (4) gegenüber der Umgebung isoliert.

2. Kraftstoffversorgungsanlage (1) nach Anspruch 1, wobei der Mantel (19) undurchlässig gegenüber Wasserstoff ist.

3. Kraftstoffversorgungsanlage (1) nach einem der Ansprüche 1 oder 2, wobei der Zwischenraum (20) an einen Fluidkreislauf angeschlossen ist, in dem ein Wasserstoffsensor angeordnet ist, wobei der Wasserstoffsensor einen Austritt von Wasserstoff aus dem Wärmeübertrager (4) in den Fluidkreislauf detektiert.

4. Krafstoffversorgungsanlage (1) nach einem der Ansprüche 1 bis 3, wobei der Wasserstofftank (3) über mehrere Fluidkanäle (6, 7) mit dem Wärmeübertrager (4) verbunden ist.

5. Kraftstoffversorgungsanlage (1) nach Anspruch 4, wobei in den Fluidkanälen (6, 7) jeweils eine lösbare Leitungskupplung angeordnet ist, so dass der Wasserstofftank (3) lösbar mit dem Wärmeübertrager (4) verbunden ist.

6. Kraftstoffversorgungsanlage (1) nach Anspruch 5, wobei die von tiefgekühlten Wasserstoff durchströmten Leitungskupplungen in thermischer Verbindung mit dem in dem Zwischenraum (20) strömenden Fluid stehen und **dadurch** oberhalb einer vorgegebenen Mindestbetriebstemperatur gehalten werden.

7. Kraftstoffversorgungsanlage (1) nach einem der Ansprüche 1 bis 6, wobei der Zwischenraum (20) an den Kühlkreislauf des Verbrennungsmotors (2) angeschlossen und von heißem Kühlmittel durchströmt ist.

8. Kraftstoffversorgungsanlage (1) nach einem der Ansprüche 1 bis 6, wobei der Zwischenraum (20) an einen separaten Kühlkreislauf angeschlossen ist, der von dem Kühlkreislauf des Verbrennungsmotors (2) getrennt ist.

9. Kraftstoffversorgungsanlage (1) nach einem der Ansprüche 1 bis 8, wobei in dem Kühlkreislauf des Verbrenungsmotors (2) ein Thermostatventil (18) angeordnet ist, durch das die Temperatur des Kühlmittels am Kühlmittelausgang (17) des Wärmeübertragers (4) auf eine vorgegebene Soll-Temperatur geregelt wird.

10. Kraftstoffversorgungsanlage (1) nach Anspruch 9, wobei der Kühlmittelausgang (17) und der Kühlmitteleingang (16) über das Thermostatventil (18) miteinander in Fluidverbindung bringbar sind.

## Claims

1. A fuel supply system (1) for an internal combustion engine (2) which can be operated with hydrogen or for a fuel cell, with
- a hydrogen tank (3) provided for storing deep-cooled liquid hydrogen,
- a heat exchanger (4) provided for preheating the deep-cooled hydrogen, the heat exchanger (4) having
o at least one fuel inlet (8, 9) which is in fluid connection with the hydrogen tank (3),
o at least one fuel outlet (10, 11) in fluid connection with the fuel inlet (8, 9) and via which preheated hydrogen is removed from the heat exchanger (4),
o at least one coolant inlet (16), via which hot coolant is supplied to the heat exchanger (4) from a cooling circuit of the internal combustion engine (2) or of the fuel cell, and
o at least one coolant outlet in fluid connection with the coolant inlet (16) and via which cooled coolant which has released heat to the hydrogen, is removed from the heat exchanger (4),
**characterised in that** the heat exchanger (4) is surrounded by a fluid-tight jacket (19), a space being provided between the heat exchanger (4) and the jacket (19) and through which a fluid flows which releases heat to the heat exchanger (4) and insulates the heat exchanger (4) with respect to the surroundings.

2. A fuel supply system (1) according to claim 1, wherein the jacket (19) is impermeable to hydrogen.

3. A fuel supply system (1) according to either claim 1 or claim 2, wherein the space (20) is connected to a fluid circuit in which a hydrogen sensor is positioned, the hydrogen sensor detecting an outflow of hydrogen from the heat exchanger (4) into the fluid circuit.

4. A fuel supply system (1) according to any one of claims 1 to 3, wherein the hydrogen tank (3) is connected to the heat exchanger (4) via a plurality of fluid ducts (6, 7).

5. A fuel supply system (1) according to claim 4, wherein a detachable line coupling is positioned in each of the fluid ducts (6, 7), such that the hydrogen tank (3) is detachably connected to the heat exchanger (4).

6. A fuel supply system (1) according to claim 5, wherein the line couplings through which deep-cooled hydrogen flows are thermally connected to the fluid flowing in the space (20) and are consequently maintained above a predetermined minimum operating temperature.

7. A fuel supply system (1) according to any one of claims 1 to 6, wherein the space (20) is connected to the cooling circuit of the internal combustion engine (2) and hot coolant flows through it.

8. A fuel supply system (1) according to any one of claims 1 to 6, wherein the space (20) is connected to a separate cooling circuit which is distinct from the cooling circuit of the internal combustion engine (2).

9. A fuel supply system (1) according to any one of claims 1 to 8, wherein a thermostat valve (18) is positioned in the cooling circuit of the internal combustion engine (2) and regulates the temperature of the coolant at the coolant outlet (17) of the heat exchanger (4) to a predetermined set temperature.

10. A fuel supply system (1) according to claim 9, wherein the coolant outlet (17) and the coolant inlet (16) can be brought into fluid connection with one another via the thermostat valve (18).

## Revendications

1. Installation d'alimentation en combustible (1) pour un moteur à combustion interne (2) ou une pile à combustible fonctionnant avec de l'hydrogène, comprenant :
- un réservoir d'hydrogène (3) destiné à stocker de l'hydrogène liquide à très basse température,
- un échangeur de chaleur (4) pour préchauffer l'hydrogène refroidi à très basse température, l'échangeur de chaleur (4) comprenant :
* au moins une entrée de combustible (8, 9) communiquant avec le réservoir d'hydrogène (3),
* au moins une sortie de combustible (10, 11) communiquant avec l'entrée de combustible (8, 9) pour évacuer de l'hydrogène préchauffé de l'échangeur de chaleur (4),
* au moins une entrée d'agent de refroidissement (16) par laquelle l'échangeur de chaleur (4) reçoit de l'agent de refroidissement chaud venant du circuit de refroidissement du moteur à combustion interne (2) ou de la pile à combustible, et
* au moins une sortie d'agent de refroidissement communiquant avec l'entrée de l'agent de refroidissement (16) et par laquelle l'agent de refroidissement refroidi, qui a fourni de la chaleur à l'hydrogène, est évacué de l'échangeur de chaleur (4),
**caractérisé en ce que**
l'échangeur de chaleur (4) est entouré d'une enveloppe fluidique (19) et un volume intermédiaire (20) entre l'échangeur de chaleur (4) et l'enveloppe (19) est traversé par un fluide qui fournit de la chaleur à l'échangeur de chaleur (4) et isole l'échangeur de chaleur (4) par rapport à l'environnement.

2. Installation d'alimentation en combustible (1) selon la revendication 1,
dans laquelle
l'enveloppe (19) est imperméable à l'hydrogène.

3. Installation d'alimentation en combustible (1) selon l'une des revendications 1 ou 2,
dans laquelle
le volume intermédiaire (20) est relié à un circuit de fluide dans lequel il y a un capteur d'hydrogène,
le capteur d'hydrogène détectant la sortie d'hydrogène de l'échangeur de chaleur (4) dans le circuit de fluide.

4. Installation d'alimentation en combustible selon (1) selon l'une des revendications 1 à 3,
dans laquelle
le réservoir à hydrogène (3) est relié à l'échangeur de chaleur (4) par plusieurs canaux de fluide (6, 7).

5. Installation d'alimentation en combustible (1) selon la revendication 4,
dans laquelle
les canaux de fluide (6,7) comportent chacun un accouplement de conduite détachable de façon à relier le réservoir hydrogène (3) de manière amovible à l'échangeur de chaleur (4).

6. Installation d'alimentation en combustible (1) selon la revendication 5,
dans laquelle
les raccords de conduite traversés par l'hydrogène à très basse température sont en liaison thermique avec le fluide passant dans le volume intermédiaire (20) et sont ainsi maintenus au-dessus d'une température minimale de fonctionnement, déterminée.

7. Installation d'alimentation en combustible selon (1) selon l'une des revendications 1 à 6,
dans laquelle
le volume intermédiaire (20) est relié au circuit de refroidissement du moteur à combustion interne (2) et est traversé par de l'agent de refroidissement chaud.

8. Installation d'alimentation en combustible selon (1) selon l'une des revendications 1 à 6,
dans laquelle
le volume intermédiaire (20) est raccordé à un circuit de refroidissement distinct, séparé du circuit de refroidissement du moteur à combustion interne (2).

9. Installation d'alimentation en combustible selon (1) selon l'une des revendications 1 à 8,
dans laquelle
le circuit de refroidissement du moteur à combustion interne (2) comporte une soupape thermostatique (18) qui régule la température de l'agent de refroidissement à l'entrée d'agent de refroidissement (17) de l'échangeur de chaleur (4) sur une température de consigne prédéfinie.

10. Installation d'alimentation en combustible selon (1) selon la revendication 9,
dans laquelle
la sortie d'agent de refroidissement (17) et l'entrée d'agent de refroidissement (16) communiquent par la soupape thermostatique (18).
